Europäisches Patentamt

European Patent Office

Office européen des brevets

(11) Veröffentlichungsnummer: **0 161 676**
**A2**

(12) **EUROPÄISCHE PATENTANMELDUNG**

(21) Anmeldenummer: **85105964.2**

(22) Anmeldetag: **15.05.85**

(51) Int. Cl.⁴: **E 04 H 6/42**

(30) Priorität: **18.05.84 DE 3418510**
**07.05.85 DE 3516362**

(43) Veröffentlichungstag der Anmeldung: **21.11.85**
**Patentblatt 85/47**

(84) Benannte Vertragsstaaten: **AT CH FR LI SE**

(71) Anmelder: **Appel, Dieter, Steinweg 6, D-6432 Heringen**
**(DE)**

(72) Erfinder: **Appel, Dieter, Steinweg 6, D-6432 Heringen**
**(DE)**

(74) Vertreter: **Freiherr von Schorlemer, Reinfried,**
**Brüder-Grimm-Platz 4, D-3500 Kassel (DE)**

(54) **Vorrichtung zum Auffangen von abtropfenden Schmutzwässern und Schneeresten unter Kraftfahrzeugen in Garagen und anderen Abstellplätzen.**

㊗ Die Erfindung betrifft eine Vorrichtung zum Auffangen von Schmutzwasser und Schneeresten von Kraftfahrzeugen in Garagen und anderen Abstellplätzen. Diese Vorrichtung besteht aus einer auf dem Erdboden anzulegenden, flachen, vom Kraftfahrzeug zu befahrenden Sammelwanne (1), die aus wenigstens einem Bodenteil (2, 3) mit einer umlaufenden, vom Kraftfahrzeug überfahrbaren Randerhöhung (6) gebildet ist.

Durch das Auffangen chemisch aggressiver Wässer, die sich üblicherweise auf dem Untergrund ausbreiten und den Steinfußboden schädigen und wasserdurchlässig machen können, wird das Bauwerk geschützt und gleichzeitig die Verschmutzung verhindert. Bei Bedarf wird hierbei das aufgefangene Schmutzwasser durch einfache Handgriffe entleert.

## Vorrichtung zum Auffangen von abtropfenden Schmutzwässern und Schneeresten unter Kraftfahrzeugen in Garagen und anderen Abstellplätzen

Die Erfindung betrifft eine Vorrichtung zum Auffangen von abtropfenden Schmutzwässern und Schneeresten unter Kraftfahrzeugen in Garagen und anderen Abstellplätzen.

Vorrichtungen dieser Art sind bisher nur in Form von Gruben bekannt, die in den Boden der Garage oder des Abstellplatzes eingelassen und mit einem Gitterrost od. dgl. abgedeckt werden. Ihre Herstellung ist aufwendig und nachträglich nur unter Zerstörung eines bereits bestehenden Betonfundaments möglich. Sie finden daher allenfalls bei Abstellplätzen von Reparaturwerkstätten, Waschanlagen od. dgl. Anwendung.

Der Erfindung liegt die Aufgabe zugrunde, die Vorrichtung der eingangs bezeichneten Art so auszubilden, daß sie einfach hergestellt und montiert und ohne weiteres auch nachträglich angebracht werden kann. Die Vorrichtung soll außerdem so ausgebildet sein, daß sie es ermöglicht, alles aus dem Straßenverkehr noch am Kraftfahrzeug anhaftende Schmutzwasser und alle Schneereste aufzufangen, die nach dem Abstellen des Kraftfahrzeugs abtropfen, um dadurch den Boden des Abstellplatzes wirksam zu schützen.

Zur Lösung dieser Aufgabe ist die eingangs bezeichnete Vorrichtung dadurch gekennzeichnet, daß sie aus einer auf dem Erdboden abzulegenden, flachen, vom Kraftfahrzeug zu befahrenden Sammelwanne besteht, die aus einem Boden mit einer umlaufenden und vom Kraftfahrzeug zu überfahrenden Randerhöhung gebildet ist.

Weitere vorteilhafte Merkmale der Erfindung ergeben sich aus den Unteransprüchen.

Die Erfindung bringt den Vorteil mit sich, daß Schmutzwasser, Schneereste od. dgl. in eine unter dem Kraftfahrzeug befindliche Wanne abfließen und daher nicht den jeweiligen Fußboden verschmutzen oder langfristig schädigen können. Dies gilt insbesondere für die Winterzeit, in der Schmutzwässer und Schneereste
häufig aggressive Bestandteile, z.B. Streusalz, enthalten.
Die Herstellung der Wanne erfolgt fabrikseitig, so daß die
Wanne nur zum Abstellplatz für das Kraftfahrzeug gebracht,
dort auf dem Erdboden abgelegt und bei Bedarf mit diesem fest
verbunden werden braucht.

Die Erfindung wird nachfolgend in Verbindung mit der beiliegenden Zeichnung an Ausführungsbeispielen näher erläutert. Es
zeigen:

Fig. 1 die Draufsicht einer zweiteiligen Sammelwanne mit geneigtem Boden;

Fig. 2 einen Längsschnitt längs der Linie I-I der Fig. 1;

Fig. 3 einen Querschnitt längs der Linie II-II der Fig. 1;

Fig. 4 einen teilweisen Längsschnitt durch die Sammelwanne
längs der Linie III-III der Fig. 1;

Fig. 5 einen teilweisen Längsschnitt durch die Sammelwanne
längs der Linie IV-IV der Fig. 1;

Fig. 6 die Seitenansicht einer keilförmigen Unterlage der Sammelwanne nach Fig. 1;

Fig. 7 die Draufsicht auf die Unterlage nach Fig. 6;

Fig. 8 ein auf einer Sammelwanne mit geneigtem Boden abgestelltes Kraftfahrzeug;

Fig. 9 die Draufsicht einer zweiteiligen Sammelwanne mit ebenem
Boden;

Fig. 10 einen Längsschnitt längs der Linie V-V der Fig. 9;

Fig. 11 einen Querschnitt längs der Linie VI-VI der Fig. 9;

Fig. 12 eine Seitenansicht des hinteren Endes der Sammelwanne
nach Fig. 9 in vergrößerter Darstellung;

Fig. 13 eine Draufsicht auf den in Fig. 12 dargestellten Teil
der Sammelwanne;

Fig. 14 einen teilweisen Längsschnitt durch die Sammelwanne
längs der Linie VIII-VIII der Fig. 9;

Fig. 15 schematisch die Sammelwanne nach Fig. 9 beim Entleerungsvorgang;

Fig. 16 die Draufsicht einer einteiligen Sammelwanne;

Fig. 17 einen Längsschnitt längs der Linie IX der Fig. 16 für
eine Sammelwanne mit ebenem Boden;

Fig. 18 einen Querschnitt längs der Linie X-X der Fig. 16;

Fig. 19 einen Längsschnitt längs der Linie XI-XI der Fig. 16
für eine Sammelwanne mit geneigtem Boden;

Fig. 20 einen Querschnitt längs der Linie XII-XII der Fig. 16;

Fig. 21 die Draufsicht einer mehrteiligen Sammelwanne gemäß
einer weiteren Ausführungsform der Erfindung;

Fig. 22 einen Querschnitt längs der Linie XIII-XIII der Fig. 21
für eine Sammelwanne mit ebenem Boden;

Fig. 23 einen Querschnitt längs der Linie XIV-XIV der Fig. 21
für eine Sammelwanne mit geneigtem Boden; und

Fig. 24 bis 26 Draufsichten auf ein- oder mehrteilige Sammelwannen gemäß weiteren Ausführungsformen der Erfindung.

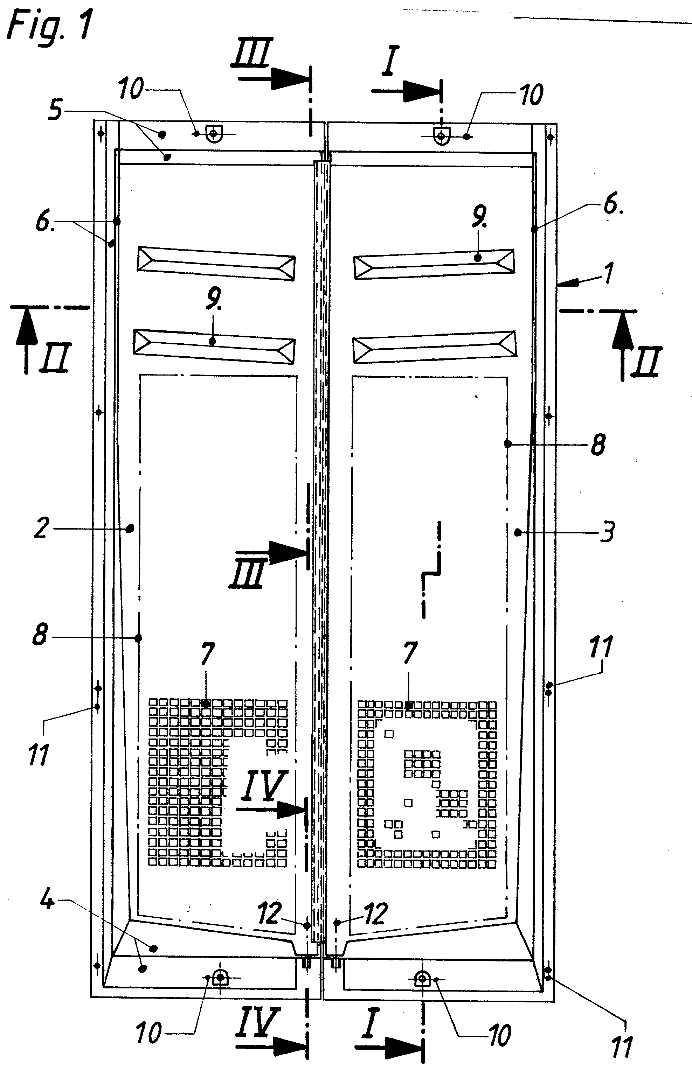

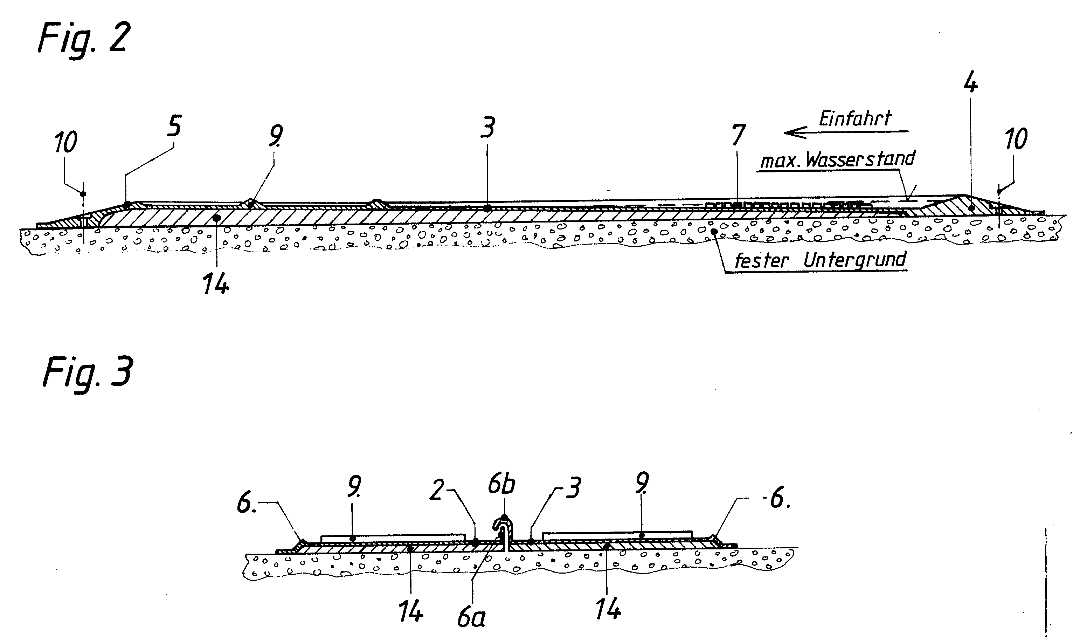

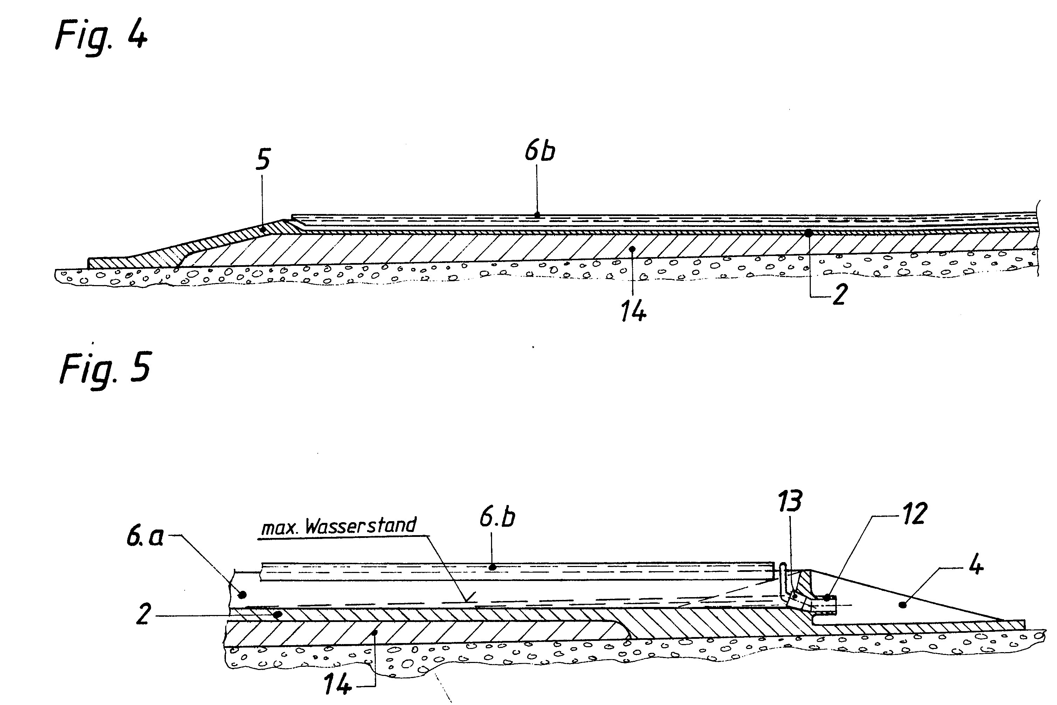

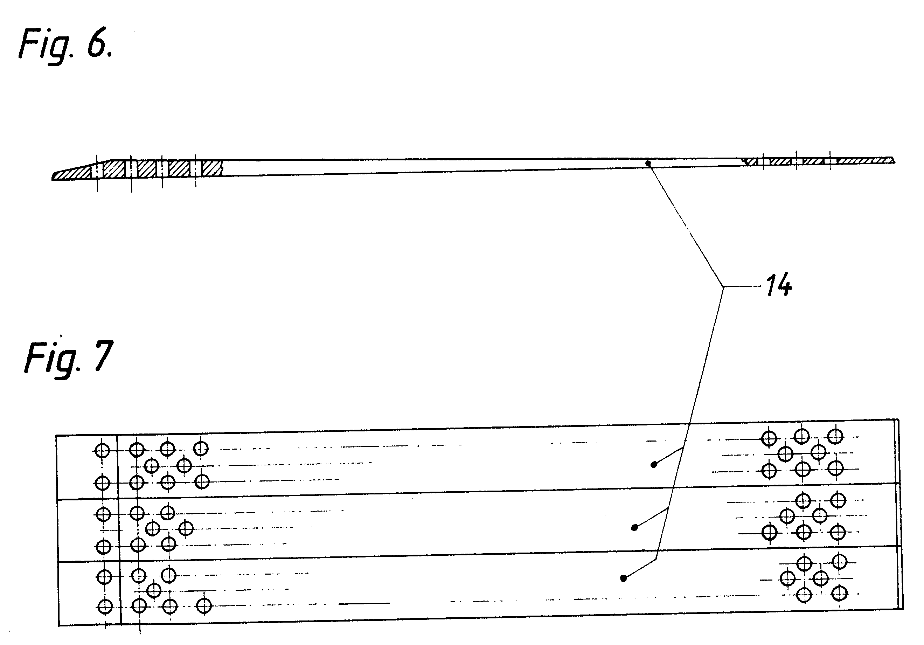

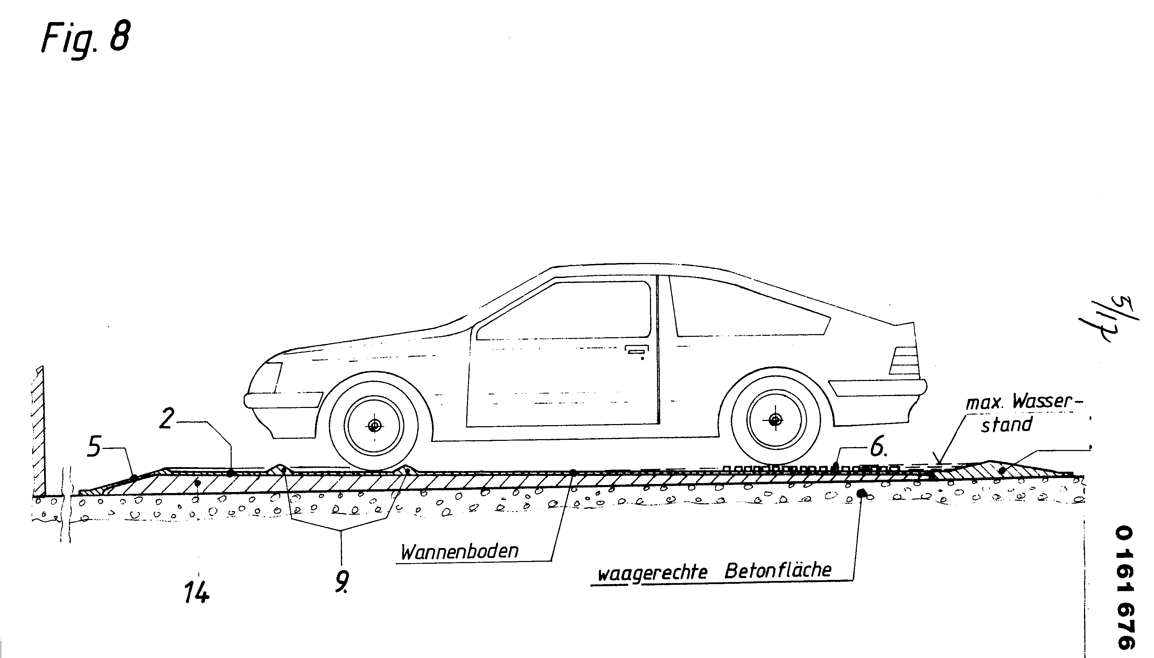

Gemäß Fig. 1 bis 8 besteht eine erfindungsgemäße Vorrichtung
zum Auffangen von abtropfenden Schmutzwässern und Schneeresten unter Kraftfahrzeugen in Garagen und anderen Abstellplätzen im wesentlichen aus einer auf dem Erdboden abzulegenden, flachen, befahrbaren Sammelwanne 1, die zwei flache, rechteckige Bodenteile 2 und 3 mit geneigten Oberflächen aufweist, die längs einer innen liegenden Seitenkante aneinander gelegt werden. Die Bodenteile 2 und 3 sind an ihren Vorderkanten mit überfahrbaren Einfahrschwellen 4, an ihren Hinterkanten mit überfahrbaren Endschwellen 5 und im übrigen mit rundum laufenden, zumindest im Bereich der äußeren Längskanten überfahrbaren Randerhöhungen 6 versehen. An ihrem seitlichen Innenkanten sind die Randerhöhungen beispielsweise als Aufkantungen 6a und 6b ausgebildet (Fig. 4), wobei die eine Aufkantung 6b mit ihrem oberen Ende die Aufkantung 6a derart übergreift, daß die beiden Bodenteile 2 und 3 seitlich unverschiebbar zueinander gehalten und die Spalte zwischen ihnen abgedeckt sind. In die Oberseiten der Bodenteile 2 und 3 sind im Standbereich der Vorder- und/oder Hinterräder als Rippenstruktur gezeichnete, griffige, erhaben vorstehende Flächen 7 ausgebildet, die vermeiden sollen, daß die Räder im Wasser stehen und darin anfrieren. Der von den Vorderrädern befahrene Bereich der Bodenteile 2 und 3 weist je eine dem jeweiligen Wannenwerkstoff angepaßte, eingearbeitete oder aufgetragene Oberflächenstruktur 8 als Bodenverstärkung oder auch Rutschsicherung auf. Im Standbereich der Vorderräder sind in den Wannenwerkstoff geformte oder aufgesetzte, quer zur Fahrtrichtung erstreckte Schwellen 9 angebracht, die dem Fahrer das Erreichen der richtigen Position in der Sammelwanne 1 signalisieren und auch als Helteschwellen dienen können, die das Kraftfahrzeug auch ohne Betätigung der Handbremse sicher auf den geneigten Oberflächen der Bodenteile 2 und 3 halten (Fig. 8). Zur Befestigung der Sammelwanne am Erdboden dienen in den Bodenteilen 2 und 3 ausgebildete Löcher 10. Weitere, seitlich angebrachte Löcher 11 können dazu dienen, die Bodenteile 2 und 3 bei Nichtgebrauch an einer Wand aufzuhängen.

Die Bodenteile 2 und 3 bilden mit den Einfahr- und Endschwellen 4,5 sowie den Randerhöhungen 6 die Sammelwanne 1, die z.B. ein Fassungsvermögen von dreißig Liter besitzt. Das sich nach dem Abstellen des Kraftfahrzeugs als Ganzes in der Sammelwanne

ansammelnde Wasser kann durch Auslaßstutzen 12 (Fig. 1 und
5) abgeführt werden, die in seitlich neben den Einfahrschwellen
4 befindlichen Teilen der Randerhöhungen 6 ausgebildet und
normalerweise mit einem Stopfen 13 verschlossen sind. An die
Auslaßstutzen 12 können zu einem Abflußkanal od. dgl. führende
Schläuche angeschlossen werden.

Wie insbesondere aus Fig. 4 bis 6 ersichtlich ist, ist in je
eine in den Unterseiten der Bodenteile 2 und 3 ausgebildete
Ausnehmung je eine keilförmige Unterlage 14 eingelegt, die
den Bodenteilen 2 und 3 eine von den Endschwellen 5 bis zu
den Einfahrschwellen 4 abfallende Schräglage erteilt, so daß
beim Herausziehen der Stopfen 13 das gesammelte Wasser automatisch abfließt.

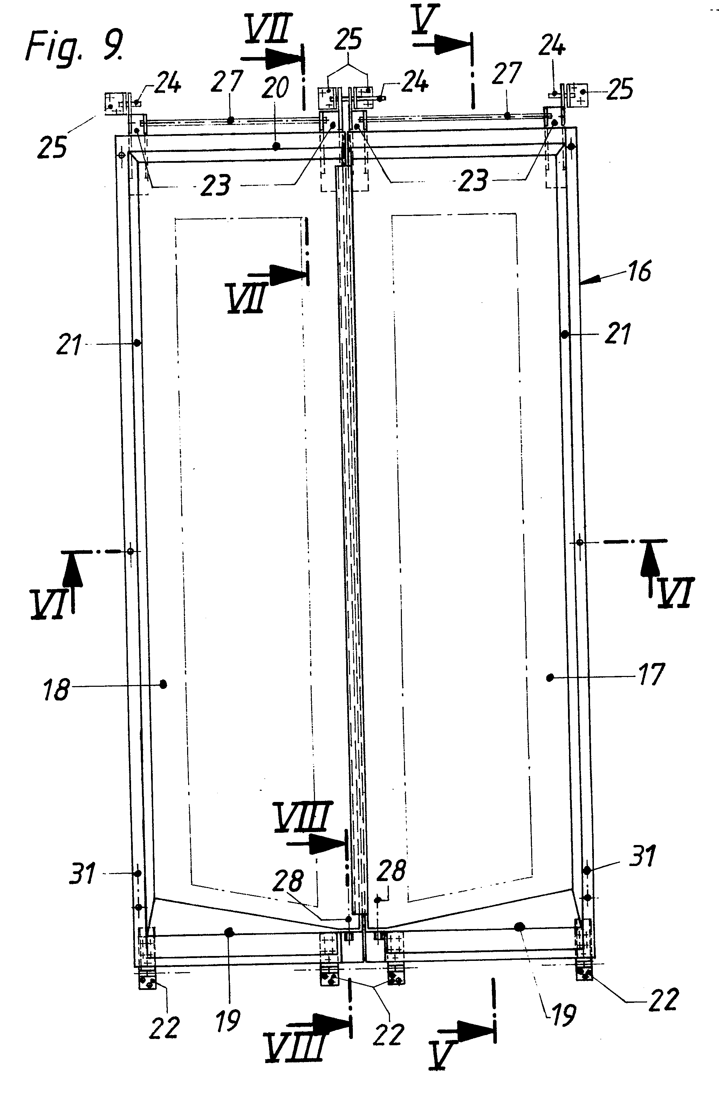

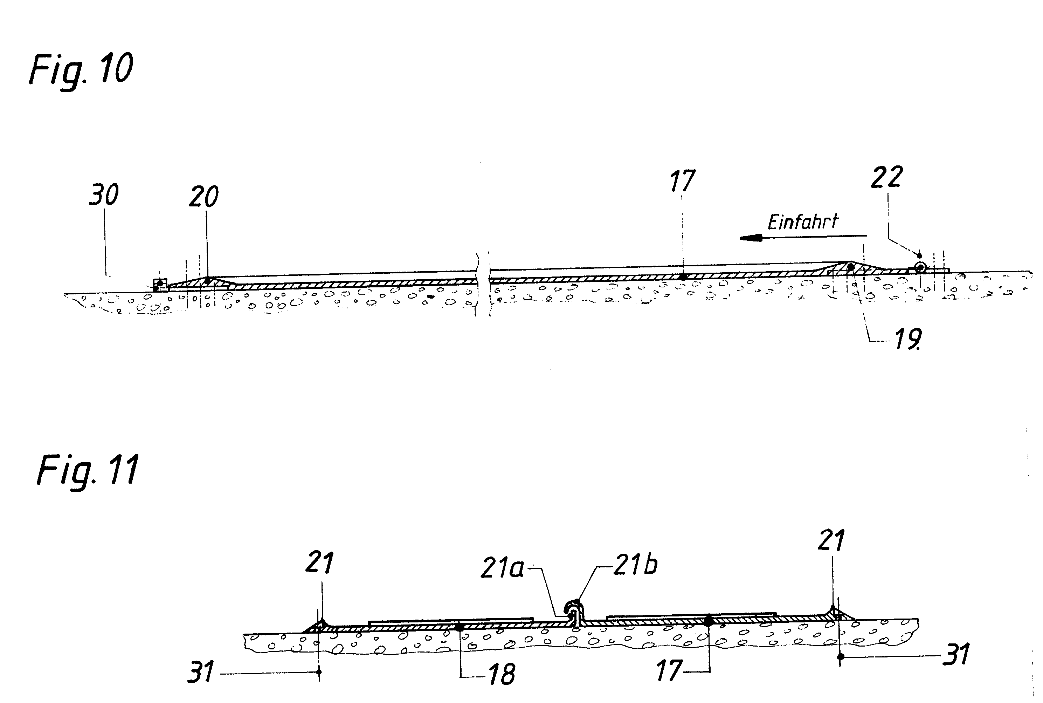

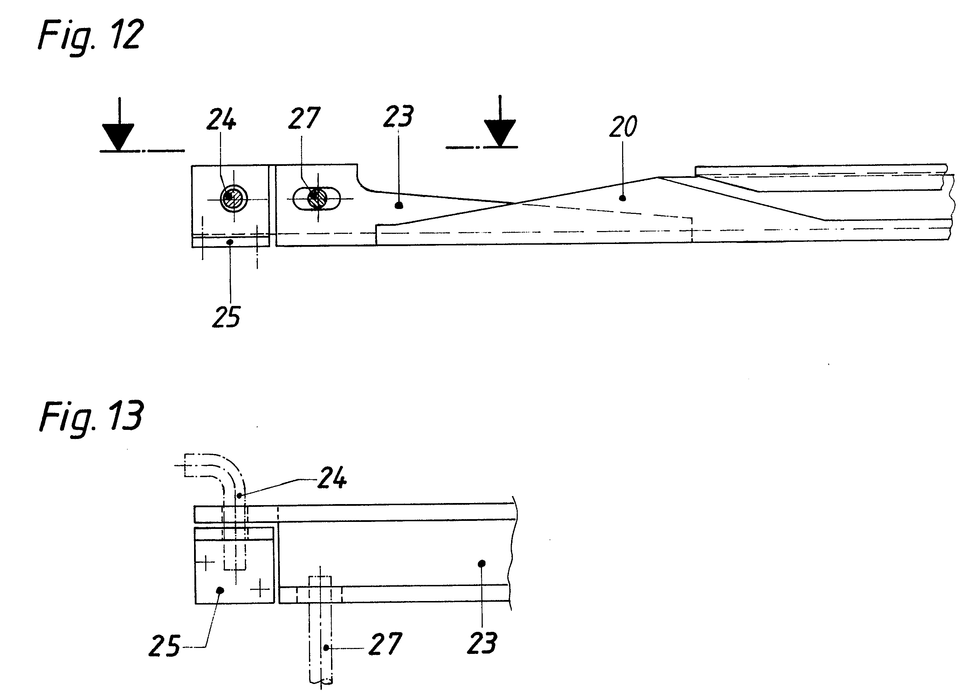

Fig. 9 bis 15 zeigen eine zweiteilige Sammelwanne 16, die entsprechend der oben beschriebenen Ausführungsform aus zwei Bodenteilen
17 und 18 zusammengesetzt wird, die überfahrbare Einfahr- und
Endschwellen 19 und 20 sowie überfahrbare Randerhöhungen 21
mit innen liegenden Aufkantungen 21a und 21b aufweisen. Im
Gegensatz zu der Ausführungsform nach Fig. 1 bis 8 sind keine
keilförmigen Unterlagen 14 vorgesehen, so daß der von den Oberflächen der Bodenteile 17 und 18 gebildete Boden der Sammelwanne 16 im wesentlichen eben angeordnet ist.

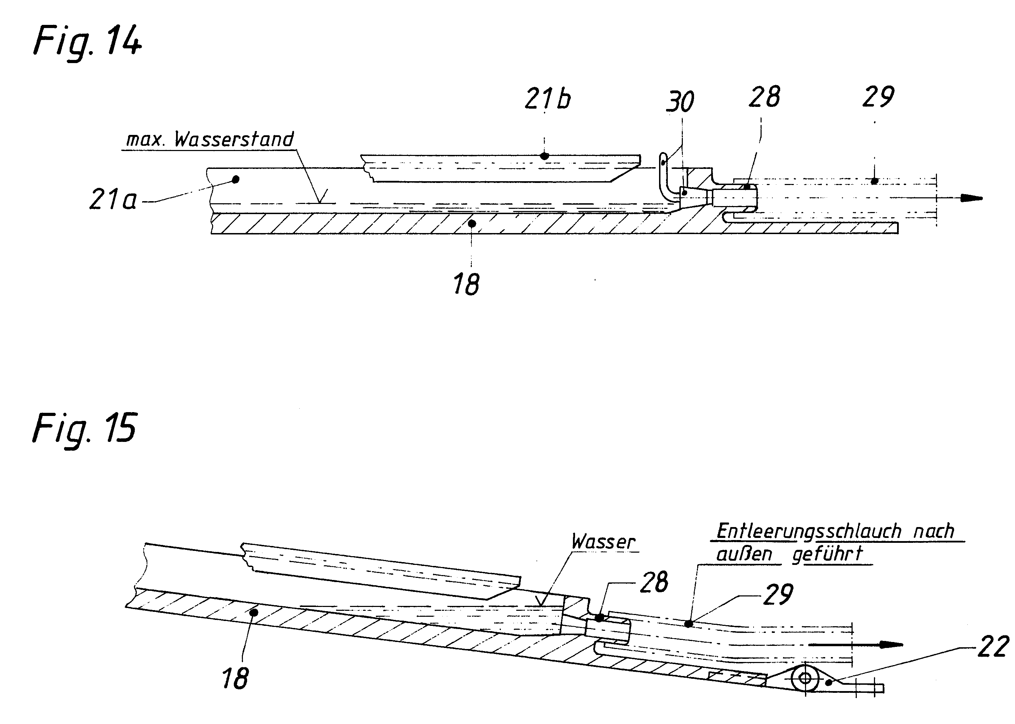

Damit die Sammelwanne 16 entleert werden kann, sind die Bodenteile 17 und 18 an ihren Vorderkanten mit scharnierartigen Ansätzen
22 versehen, die im Erdboden verankert werden und eine Verschwenkung der gesamten Sammelwanne 16 um eine quer zu ihrer Längsachse
verlaufende Achse ermöglichen (Fig. 1,10,12,13). An ihren hinteren Enden sind die Bodenteile mit Ansätzen 23 versehen, die
mittels Befestigungsstiften 24 an im Erdboden verankerten Befestigungswinkeln 25 befestigt werden. Außerdem sind die Ansätze 23
jedes Bodenteils 17,18 von je einer quer zu deren Längsachse
angeordneten Stange 27 durchragt. Infolge dieser Anordnung
kann jedes Bodenteil nach dem Herausziehen der zugehörigen Befestigungsstifte 24 aus den Befestigungswinkeln 25 mit hilfe
der Stange 27 erfaßt, angehoben und um die am entgegengesetzten
Ende befindlichen Scharniere 22 verschwenkt werden (Fig. 15),
um dadurch das in den beiden Wannenteilen befindliche Wasser
durch Auslaßstutzen 28 und mit diesen verbundene Schläuche
29 ausfließen zu lassen. Im Normalzustand sind die Auslaßstutzen 28
mit Stopfen 30 verschlossen. Zum Aufhängen der Bodenteile 17,
18 an einer Wand dienen Löcher 31.

Zwei weitere Ausführungsformen der Erfindung sind in den Fig.
16 bis 20 dargestellt. Sie enthalten eine einteilige, im wesentlichen rechteckige Sammelwanne 33 mit einem einteiligen Bauteil
34a bzw. 34b, überfahrbaren Einfahr- und Endschwellen 35 bzw.
36 und rundum laufenden Randerhöhungen 37. Wegen der Einteiligkeit des Bodenteils 34a,b der Sammelwanne 33 können hier die
mittleren Aufkantungen 6a,6b bzw. 21a,21b fehlen. Zum Entleeren
der Sammelwanne können sowohl im Bereich der Einfahr- und Endschwellen 35,36 als auch im Bereich der Randerhöhungen 37 Auslaßstutzen 38 vorgesehen werden, an die durch Pfeile angedeutete
Schläuche 39 anschließbar sind. Hierdurch ist es möglich, die
Sammelwanne an jeder kurzen oder langen Seite anzuheben und
dadurch zu entleeren. Zur Erleichterung dieses Vorgangs können
an allen vier Seiten Befestigungs- und Hebevorrichtungen entsprechend Fig. 9 bis 15 (dort Bezugszeichen 22 bis 27) vorgesehen
sein.

Zur Verstärkung des Wannenmaterials können innerhalb der von
den Rädern des Kraftfahrzeugs zu befahrenden Bereichen besondere
Oberflächenstrukturen 40 und Halteschwellen 41 ausgebildet
werden. Löcher 42 und 43 in den seitlichen und stirnseitigen
Enden des Bodenteils 34a,b dienen zum Aufhängen der Sammelwanne
bei Nichtgebrauch oder auch zu deren Befestigung am Erdboden.

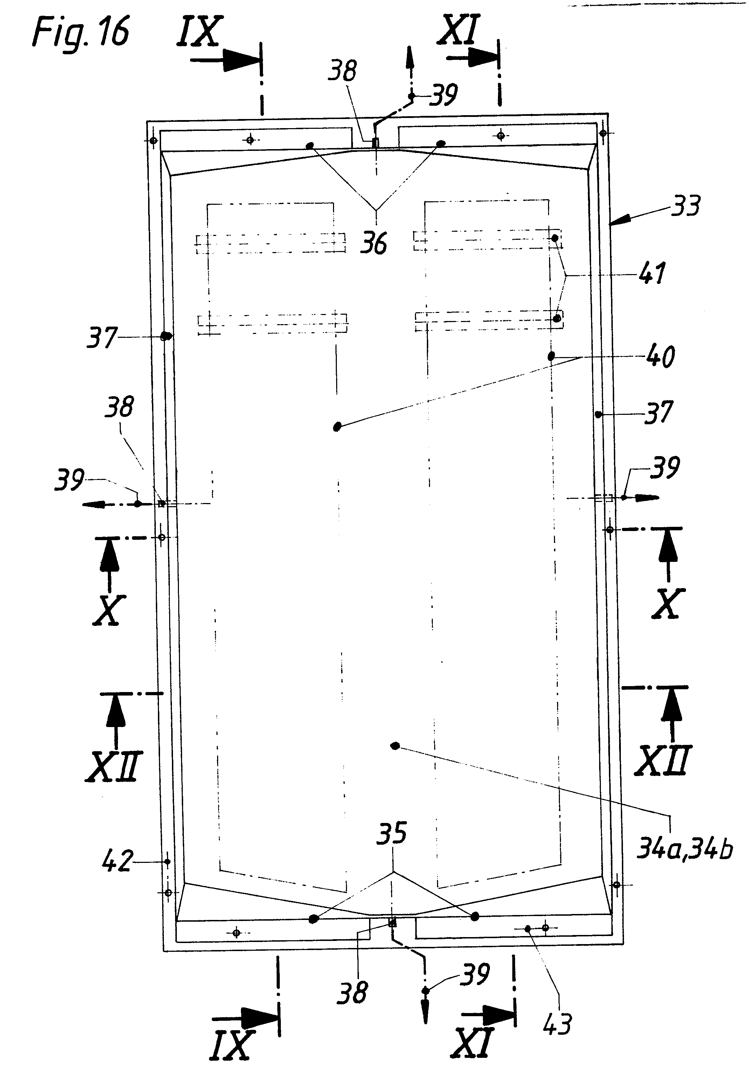

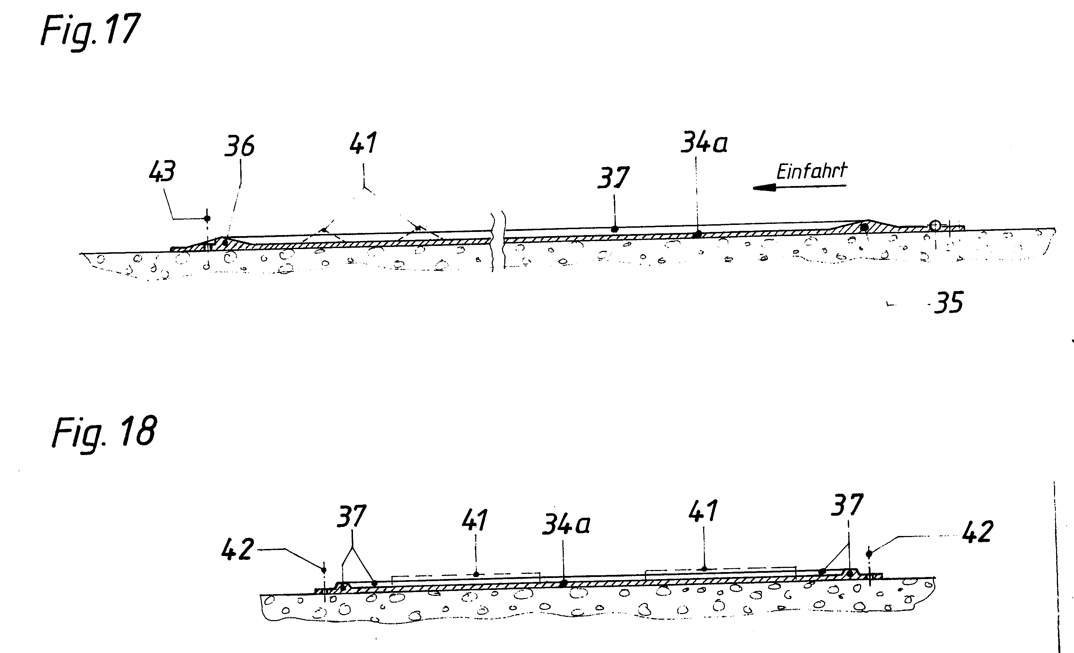

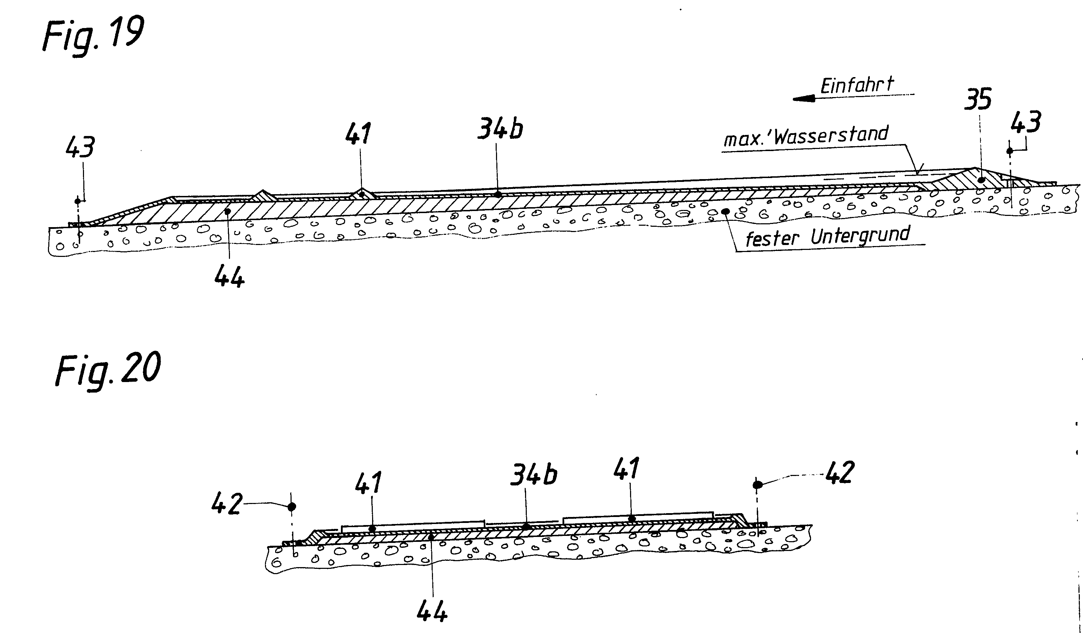

Die aus Fig. 16 ersichtliche Sammelwanne 33 kann in zwei Ausführungen hergestellt werden. Bei der Ausführung nach Fig. 17
und 18 ist entsprechend Fig. 9 bis 15 ein eben angeordnetes
Bodenteil 34a vorgesehen, während bei der Ausführungsform nach Fig. 19 und 20 entsprechend Fig. 1 bis 8 ein Bodenteil 34b
mit geneigtem Wannenboden vorgesehen ist. Hierzu weist das
einteilige Bodenteil 34b in seiner Unterseite eine keilförmige
Ausnehmung auf, in die eine entsprechend keilförmige Unterlage
44 eingelegt ist. Diese Unterlage 44 bewirkt, daß der Boden
der Sammelwanne 34 zwischen den Einfahr- und Endschwellen 35
bzw. 36 schräg verläuft, so daß das gesammelte Wasser durch
die zugehörigen Auslaßstutzen 35 automatisch abfließen kann.

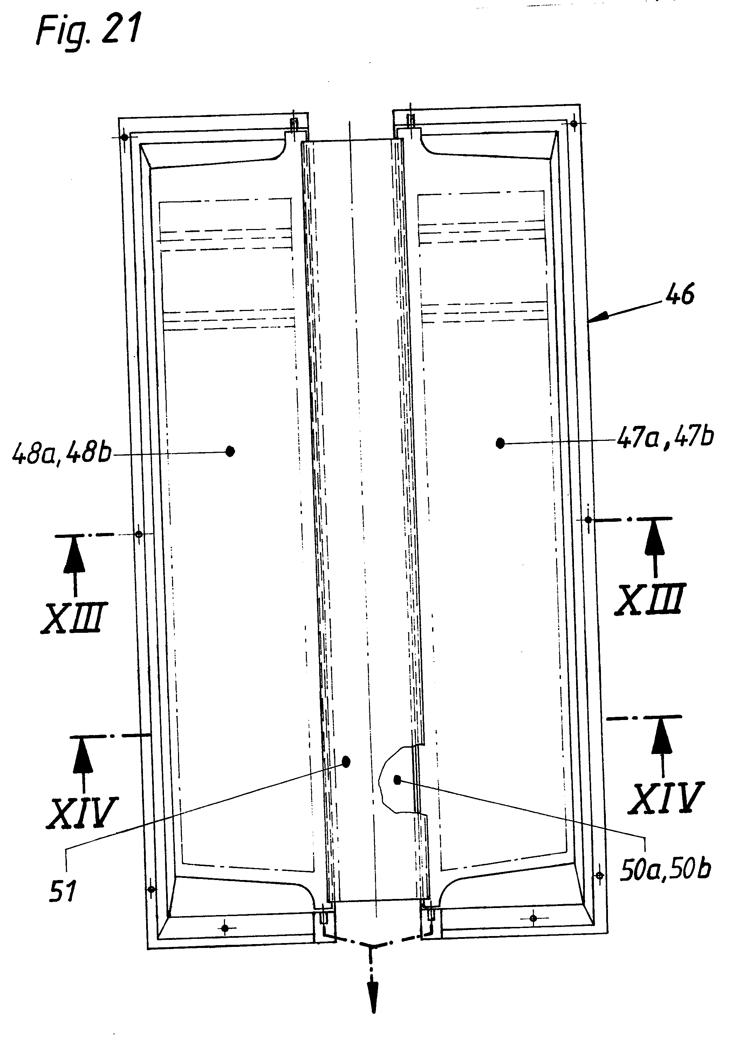

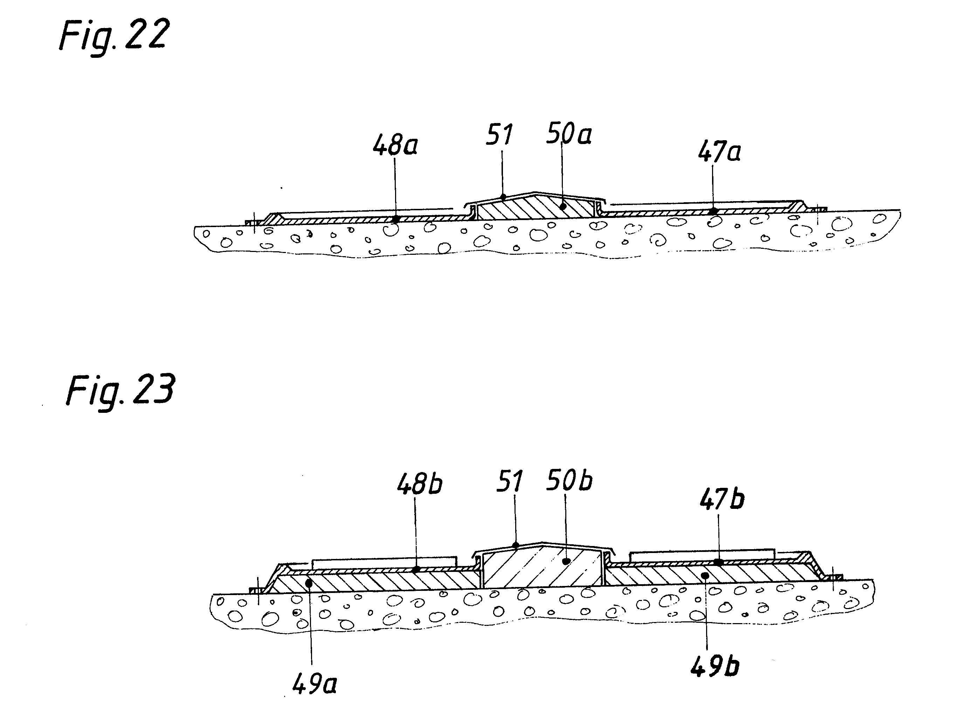

Zwei weitere Ausführungen der Erfindung sind in Fig. 21 bis
23 dargestellt. Sie enthalten eine dreiteilige Sammelwanne
46, die aus je zwei etwa rechteckförmigen Bodenteilen 47a,
48a bzw. 47b,48b gebildet ist, welche entsprechend den übrigen
Ausführungsformen mit rundum verlaufenden Randerhöhungen, Schwellen und dgl. versehen sein können. Dabei können die Bodenteile
entweder gemäß Fig. 22 eben oder gemäß Fig. 23 mit Hilfe je
einer keilförmigen Unterlage 49a,49b geneigt angeordnet sein.
Im Unterschied zu den Ausführungsformen nach Fig. 1 bis 15
grenzen die beiden Bodenteile jedoch nicht längs ihrer inneren
Seitenkanten aneinander. Stattdessen ist zwischen den beiden
parallel angeordneten Bodenteilen 47a, 48a bzw. 47b, 48b jeweils
ein Zwischenstück 50a bzw. 50b angeordnet, das durch eine Abdekkung 51 überspannt wird, die an ihren seitlichen Längsrändern
auch die zugeordneten Randerhöhungen der Bodenteile übergreift
und diese dadurch festlegt bzw. die offenen Spalte abdeckt.

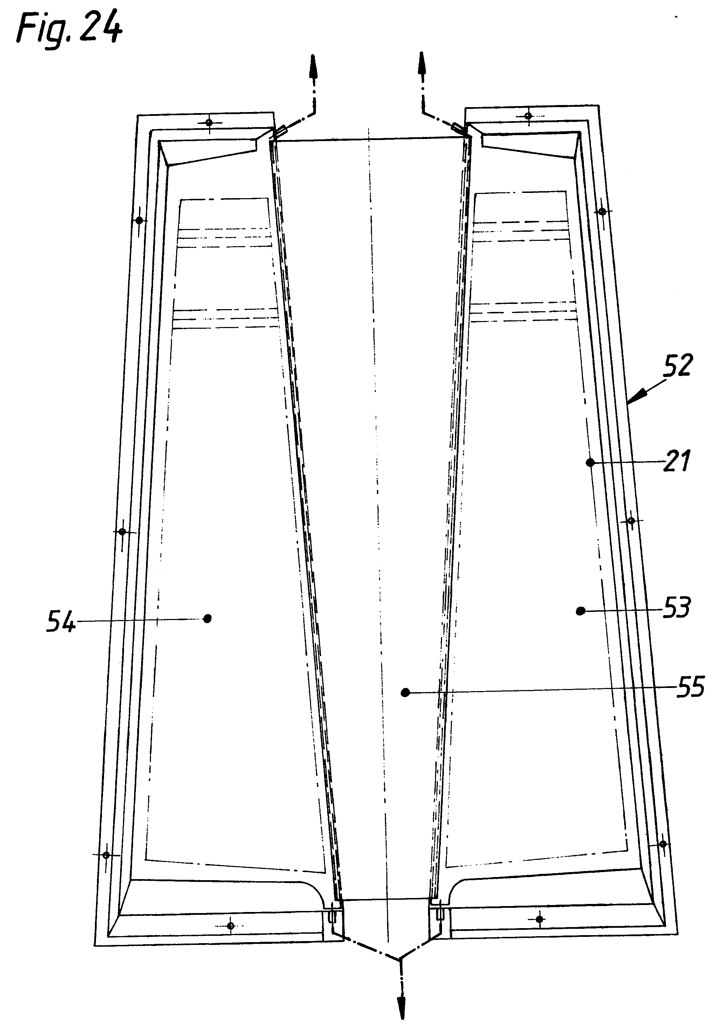

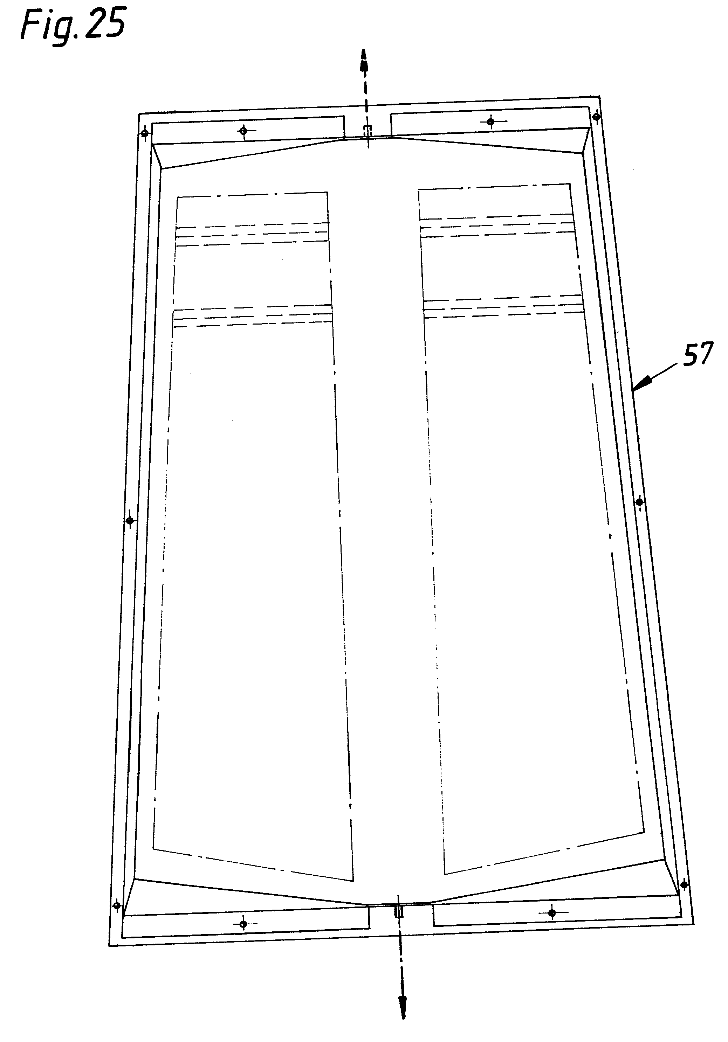

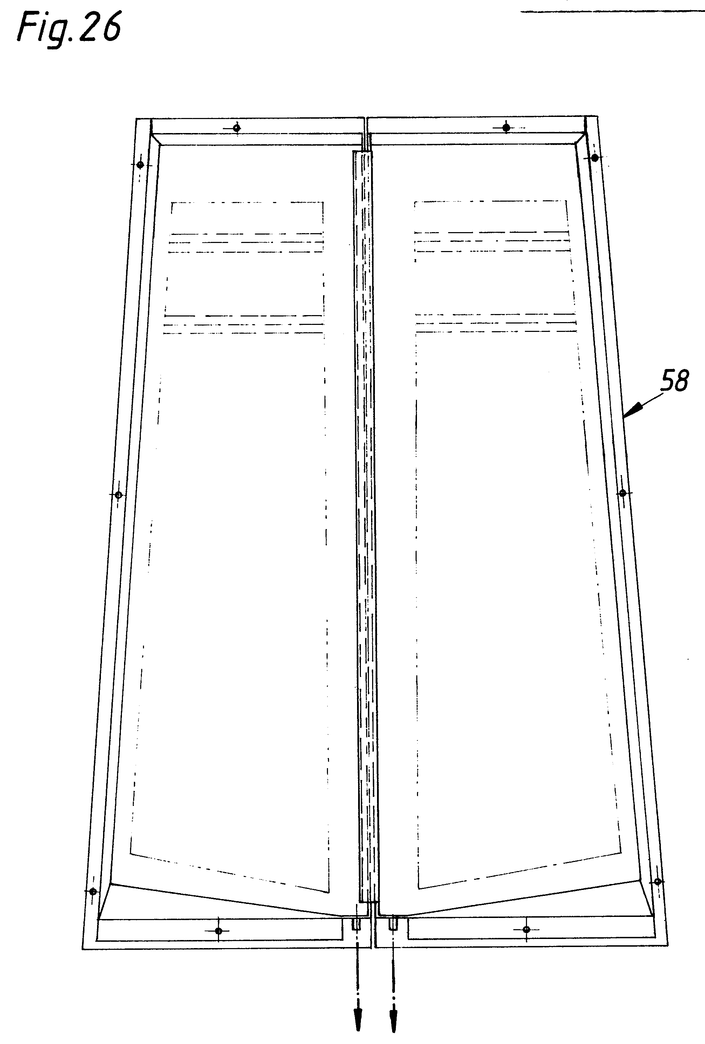

Fig. 24 zeigt eine Ausführungsform für eine dreiteilige Sammelwanne 52, die im wesentlichen der Sammelwanne 46 nach Fig.
21 entspricht, jedoch aus zwei Bodenteilen 53 und 54 und einem
Zwischenstück mit Abdeckkappe 55 zusammengesetzt ist, die andere
als rechteckige, z.B. trapezförmige Grundrisse aufweisen. Entsprechend zeigen Fig. 25 und 26 je eine einteilige bzw. zweiteilige
Sammelwanne 57 bzw. 58 mit anderen als rechteckigen Grundrißformen. Dabei kann der Wannenboden jeweils eben oder geneigt angeordnet sein.

Die eigentliche Sammelwanne wird jeweils durch die beschriebenen
Bodenteile und deren umlaufenden Randerhöhungen gebildet, die in Befahrungsrichtung als überfahrbare Schwellen ausgebildet
sind. Bei der mehrteiligen Ausführung wird die innere seitliche
Randerhöhung durch entsprechende Aufkantung des Materials,
die äußere seitliche Randerhöhung durch einen erhöhten, überfahrbaren seitlichen Randstreifen erreicht. Die sich hierdurch
ergebende Wannentiefe von ca. 40 mm kann als ausreichend betrachtet werden, wenn man zugrunde legt, daß die Wanne für ein Fassungsvermögen von ca. 30 1 Wasser vorgesehen ist. Die äußeren
Abmessungen der Wanne dürften für ein Kraftfahrzeug mittlerer
Größe ca. 5000 mm Länge und ca. 2200 mm Breite betragen bei
einer Bodenstärke von ca. 10 mm, die je nach einsetzbarem Werkstoff auch abweichen kann. Die Verwendung verschiedener Werkstoffe und entsprechende Kombinationen untereinander erzwingen
und erlauben je nach Auswahl die verschiedensten Formgebungen.
Die sich hierdurch ergebenden Wannenausführungen sind einteilig,
zweiteilig und auch mehrteilig.

Als Werkstoffe kommen Materialien zum Einsatz, die durch Festigkeit, Formstabilität, Antikorrosivität und geringes spezifisches Gewicht ausgezeichnet sind. Als besonders geeignete Werkstoffe gelten spezielle Kunststoffe, glasfaserverstärkte Kunststoffe, nicht rostende Bleche sowie mit Kunststoff, Gummi oder
anderen Schutzschichten versehenen Bleche oder nur aus Gummi
mit entsprechenden Gewebeeinlagen bestehenden Materialien.
Als Werkstoffe für die keilförmigen Unterlagen sind solche
geeignet, die Formstabilität und geringes Eigengewicht aufweisen.
Besonders geeignet bei entsprechender Konstruktion sind Mineralfaserplatten und hydrophob präparierte Platten auf Cellulosebasis sowie geschäumte druckfeste Kunststoffe wie Polyurethan
und Polystyrol.

Die Zeichnungen lassen erkennen, daß die Erfindung in vieler
Hinsicht abgeändert und variiert werden kann. Dies trifft insbesondere zu für die Ausführung des ebenen oder geneigten Wannenbodens sowie die sich daraus ergebende Anordnung der Wasserablaßstutzen, die dazugehörige Anordnung der Halte- und Befestigungseinrichtung mit den Scharnieren, die Richtungswahl der Neigung und die für die Fahr- und Standsicherheit des Fahrzeuges

wichtigen Schwellen und sonstigen Oberflächenstrukturen des
Wannenbodens. Weiterhin können die Auslaßstutzen weggelassen
werden, in welchem Fall die Sammelwanne von Zeit zu Zeit mit
einem Tuch, einem Schwamm od. dgl. vom aufgefangenen Wasser
befreit werden muß. Schließlich können die keilförmigen Unterlagen mit den Bodenteilen aus einem Stück bestehen.

Dieter Appel, 6432 Heringen

## Ansprüche

1) Vorrichtung zum Auffangen von abtropfenden Schmutzwässern und Schneeresten unter Kraftfahrzeugen in Garagen und anderen Abstellplätzen, dadurch gekennzeichnet, daß sie aus einer auf dem Erdboden abzulegenden, flachen, vom Kraftfahrzeug zu befahrenden Sammelwanne (1,16,33,46,52,57,58) besteht, die aus wenigstens einem Bodenteil (2,3,17,18,34,47,48,53,54) mit einer umlaufenden, erhöhten und vom Kraftfahrzeug überfahrbaren Randerhöhung (6,21,37) gebildet ist.

2) Vorrichtung nach Anspruch 1, dadurch gekennzeichnet, daß die Sammelwanne (1,16) wenigstens einen Auslaßstutzen (12,28) für das gesammelte Wasser aufweist.

3) Vorrichtung nach Anspruch 1 oder 2, dadurch gekennzeichnet, daß die Sammelwanne (1,33,46) einen geneigten Boden aufweist.

4) Vorrichtung nach wenigstens einem der Ansprüche 1 bis 3, dadurch gekennzeichnet, daß die Sammelwanne (1,16,46,52,58) aus mehreren Bodenteilen (2,3 bzw. 17,18 bzw. 47,48 bzw. 53,54) gebildet ist.

5) Vorrichtung nach Anspruch 4, dadurch gekennzeichnet, daß die Sammelwanne (1,16) aus zwei Bodenteilen (2,3 bzw. 17,18) gebildet ist, die längs ihrer inneren Längskanten aneinandergrenzen, wobei die zugeordnete Randerhöhung (6b,21b) eines der beiden Bodenteile die zugeordnete Randerhöhung (6a,21a) des anderen Bodenteils übergreift.

6) Vorrichtung nach wenigstens einem der Ansprüche 1 bis 5, dadurch gekennzeichnet, daß die Randerhöhungen (6,21,37) an den stirnseitigen Enden der Bodenteile (1,16,33) als überfahrbare Einfahr- und/oder Endschwellen (4,5,19,20,35,36) ausgebildet sind.

7) Vorrichtung nach wenigstens einem der Ansprüche 3 bis 6, dadurch gekennzeichnet, daß auf den Unterseiten der Bodenteile (1,33,46) keilförmige Unterlagen (14,44,49) vorgesehen sind.

8) Vorrichtung nach wenigstens einem der Ansprüche 1 bis 7, dadurch gekennzeichnet, daß in der Oberfläche der Bodenteile (1,33) Halteschwellen (9,41) ausgebildet sind.

9) Vorrichtung nach wenigstens einem der Ansprüche 1 bis 8, dadurch gekennzeichnet, daß im Standbereich der Räder erhaben vorstehende Flächenteile (7) vorgesehen sind.

10) Vorrichtung nach wenigstens einem der Ansprüche 1 bis 9, dadurch gekennzeichnet, daß das Bodenteil (17,18) an seinem einen Ende mit einem Scharnier (22) und an seinem anderen Ende mit einer Hebe- und Befestigungsvorrichtung (24,25,26,27) versehen ist.

11) Vorrichtung nach wenigstens einem der Ansprüche 1 bis 10, dadurch gekennzeichnet, daß das Bodenteil (1) im Bereich der Fahrspuren mit als Rutschsicherung dienenden Oberflächenstrukturen (8) versehen ist.

12) Vorrichtung nach wenigstens einem der Ansprüche 1 bis 11, dadurch gekennzeichnet, daß das Bodenteil (1,16,33) mit Löchern (10,11, 31,42,43) für Befestigungs- und/oder Aufhängeelemente versehen ist.

Fig. 1

0 161 676

## Fig. 2

Einfahrt
max. Wasserstand
fester Untergrund

## Fig. 3

0 161 676

## Fig. 4

5  6b

14  2

## Fig. 5

6.a  max. Wasserstand  6.b  13  12

2  4

14

0 161 676

Fig. 6.

14

Fig. 7

Fig. 8

max. Wasserstand

2

5

6.

14

9

Wannenboden

waagerechte Betonfläche

5/12

0 161 676

0 161 676

Fig. 9.

## Fig. 10

30  20  17  22

Einfahrt

19

## Fig. 11

21  21a  21b  21

31  18  17  31

0 161 676

## Fig. 12

## Fig. 13

## Fig. 14

21b    30    28    29

max. Wasserstand

21a

18

## Fig. 15

Wasser

Entleerungsschlauch nach
außen geführt

28    29

18    22

0 161 676

Fig.16

0 161 676

10/17

Fig. 17

Fig. 18

## Fig. 19

Einfahrt

35

43

41

34b

43

max.'Wasserstand

44

fester Untergrund

## Fig. 20

42

41

34b

41

42

44

0 161 676

12/17

0 161 676

*Fig. 21*

46

48a, 48b

47a, 47b

XIII

XIII

XIV

XIV

51

50a, 50b

Fig. 22

Fig. 23

14/17

0 161 676

Fig. 24

52

21

53

54

55

0 161 676

Fig. 25

57

# Fig.26

58